## Europäisches Patentamt

## European Patent Office

## Office européen des brevets

(19)

(11) Veröffentlichungsnummer: **0 046 455**
**A1**

(12) **EUROPÄISCHE PATENTANMELDUNG**

(21) Anmeldenummer: **81890127.4**

(22) Anmeldetag: **21.07.81**

(51) Int. Cl.³: **B 01 D 50/00,** B 01 D 47/06, E 21 F 5/20

(30) Priorität: **20.08.80 AT 4247/80**

(43) Veröffentlichungstag der Anmeldung: **24.02.82**
**Patentblatt 82/8**

(84) Benannte Vertragsstaaten: **DE FR GB**

(71) Anmelder: **VOEST-ALPINE Aktiengesellschaft, Friedrichstrasse 4, A-1011 Wien (AT)**

(72) Erfinder: **Strahsner, Emanuel, Hangweg 46/6, A-8740 Zeltweg (AT)**

(74) Vertreter: **Kretschmer, Adolf, Dipl.-Ing., Schottengasse 3a, A-1014 Wien (AT)**

(54) **Einrichtung zum Vermischen von Wasser mit strömender Luft, insbesondere für Entstaubungsanlagen für den Grubenbetrieb.**

(57) Die Mischvorrichtung zum Vermischen von Wasser mit strömender Luft weist Düsen (16) zur Zuführung von Wasser auf. In Strömungsrichtung (11) der Luft ist hinter den Düsen (16) wenigstens eine vom Luftstrom (11) beaufschlagte flächige Matte (17) quer zur Strömungsrichtung (11) der Luft angeordnet. Die Matte (17) weist quer zu ihrer Flächenerstreckung Durchström- wege für die Luft auf, welche labyrinthartig ausgebildet sein können und besteht aus Streckmetallgittern in mehreren anein- ander anliegenden Lagen.

Einrichtung zum Vermischen von Wasser mit strömender Luft, insbesondere für Entstaubungsanlagen für den Grubenbetrieb.

Die Erfindung bezieht sich auf eine Einrichtung zum Vermischen von Wasser mit strömender, insbesondere staubbeladener, Luft, wobei das Wasser in versprühter oder vernebelter Form dem Luftstrom durch eine Wasserzuführungseinrichtung zugeführt wird, insbesondere für Entstaubungsanlagen für den Grubenbetrieb. Bei bekannten Einrichtungen dieser Art steigt die Luft durch Venturirohre bzw. wird durch die Venturirohre hindurch durch ein Gebläse angesaugt, wobei das Wasser durch Düsen in den engsten Abschnitt der Venturirohre eingeführt bzw. eingesprüht wird. Es ist bekannt, eine solche Einrichtung bei staubbeladener Luft zur Abscheidung des Staubes zu verwenden, wobei die Staubteilchen durch das Wasser beschwert und leichter abgeschieden werden können. Bei solchen bekannten Staubabscheidern für den Grubenbetrieb wird die aus den Venturirohren austretende Luft einem Zentrifugalabscheider zugeführt. Insbesondere im Grubenbetrieb steht für einen solchen Staubabscheider wenig Raum zur Verfügung. Die Venturirohre weisen eine verhältnismäßig große Länge auf, und es wird dadurch eine verhältnismäßig große Längenerstreckung des Staubabscheiders bedingt, welche im Grubenbetrieb nachteilig ist.

Die Erfindung zielt nun darauf ab, eine solche Einrichtung zum Vermischen von Wasser mit strömender Luft möglichst raumsparend auszubilden, und die Erfindung besteht im wesentlichen darin, daß in Strömungsrichtung der Luft hinter der Wasserzuführungseinrichtung wenigstens eine vom Luftstrom beaufschlagte flächige Matte quer zur Strömungsrichtung der Luft angeordnet ist, welche quer zu ihrer Flächenerstreckung verlaufende Durchströmwege für die Luft aufweist. Es hat sich gezeigt, daß durch eine solche quer zu ihrer Fläche durchströmte Matte eine gute Vermischung der Luft mit dem versprühten oder vernebelten Wasser erreicht werden kann. Eine solche Matte kann in Strömungsrichtung der Luft eine sehr kleine Abmessung aufweisen. Auch wenn man berücksichtigt, daß die Wasserzuführungsdüsen in einem gewissen Abstand von der Matte angeordnet sind, wird die Länge einer solchen Einrichtung zum Vermischen des Wassers mit der Luft gegenüber einer Venturirohranordnung wesentlich verringert. Die erfindungsgemäße Einrichtung weist daher insbesondere bei Entstaubungsanlagen für den Grubenbetrieb wesentliche Vorteile in bezug auf den verringerten Raumbedarf auf, ist aber auch für andere Zwecke bzw. für die Befeuchtung von Luft in Klimaanlagen infolge des geringeren Raumbedarfes mit Vorteil verwendbar.

Die Vermischung des Wassers mit der strömenden Luft erfolgt in den quer zur Flächenerstreckung der Matte verlaufenden Durchströmwegen derselben. Gemäß der Erfindung sind daher zweckmäßig diese Durchströmwege labyrinthartig ausgebildet, wodurch eine bessere Vermischung gewährleistet wird.

Gemäß der Erfindung kann die Matte aus mehreren aneinander aufliegenden Lagen von gegeneinander verschobenen Metallgittern bestehen. Solche Metallgitter nehmen das Wasser nicht auf und quellen auch unter der Feuchtigkeitseinwirkung nicht auf, sodaß die Matte im Betrieb unverändert bleibt und fallweise auch leicht gereinigt werden kann. Gemäß einer bevorzugten Ausführungsform der Erfindung sind diese Metallgitter von Streckmetallgittern gebildet. Streckmetallgitter sind in der Technik hinlänglich bekannt und werden üblicherweise als Ziergitter verwendet. Streckmetallgitter werden in der Weise hergestellt, daß ein mit gegeneinander versetzten Schlitzen versehenes Blech in Richtung quer zu den Schlitzen gedehnt wird. Es bilden sich auf diese Weise Stege, welche durch das Strecken aus der Ebene des Bleches verwunden werden und welche quer zur Oberfläche des Gitters liegen. Die einzelnen aufeinandergeschichteten Streckmetall-

0046455

gitter liegen daher nicht dicht aneinander an. Da die einzelnen Lagen von Streckmetallgittern gegeneinander verschoben sind, werden die Durchtrittsöffnungen senkrecht zur Mattenfläche gesehen verkleinert oder sogar zur Gänze abgedeckt, wobei sich aber in der Richtung der Fläche der Matte zwischen den einzelnen Streckmetallgittern Durchtrittswege ergeben. Die durch die Matte strömende Luft muß daher Labyrinthwege durchsetzen, wodurch eine gute Vermischung der Wassertröpfchen oder des Wassernebels mit der Luft erreicht wird, wodurch besonders lange Labyrinthwege zwischen den einzelnen Lagen der Streckmetallgitter geschaffen werden und die Durchwirbelung der angefeuchteten Luft verbessert wird.

In der Zeichnung ist die Erfindung anhand eines Ausführungsbeispieles schematisch erläutert, welches einen Entstauber für den Grubenbetrieb zeigt.

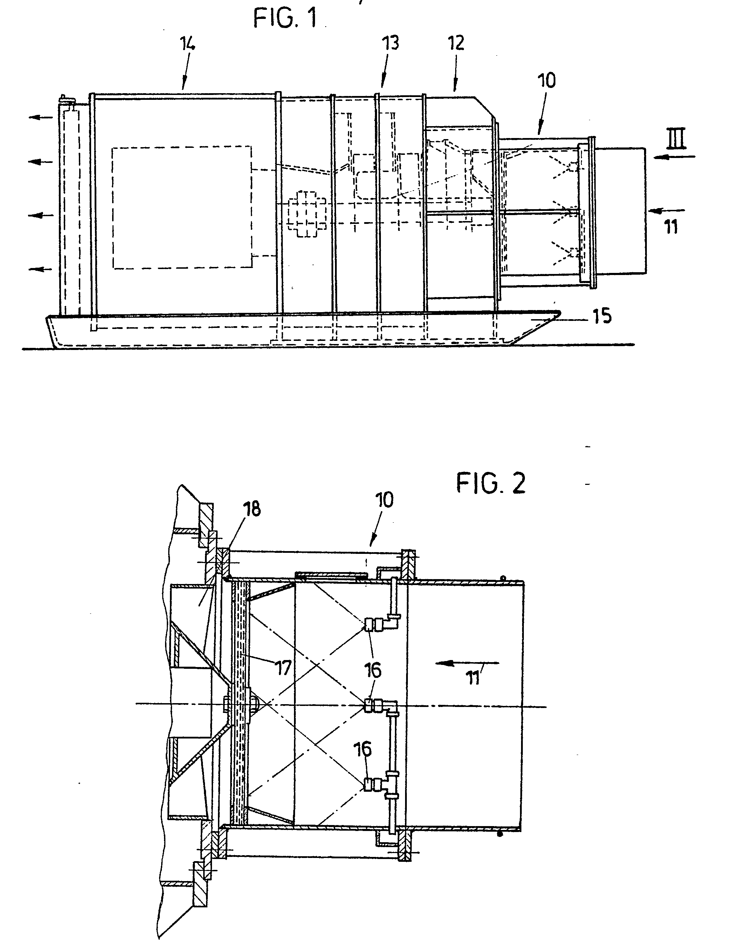

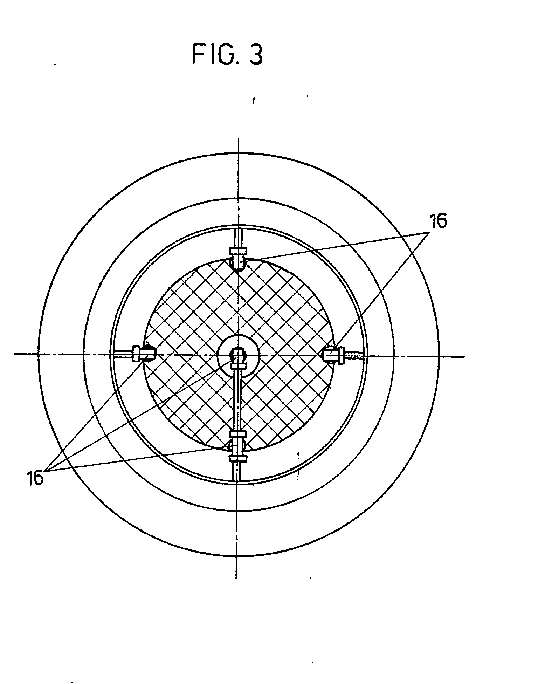

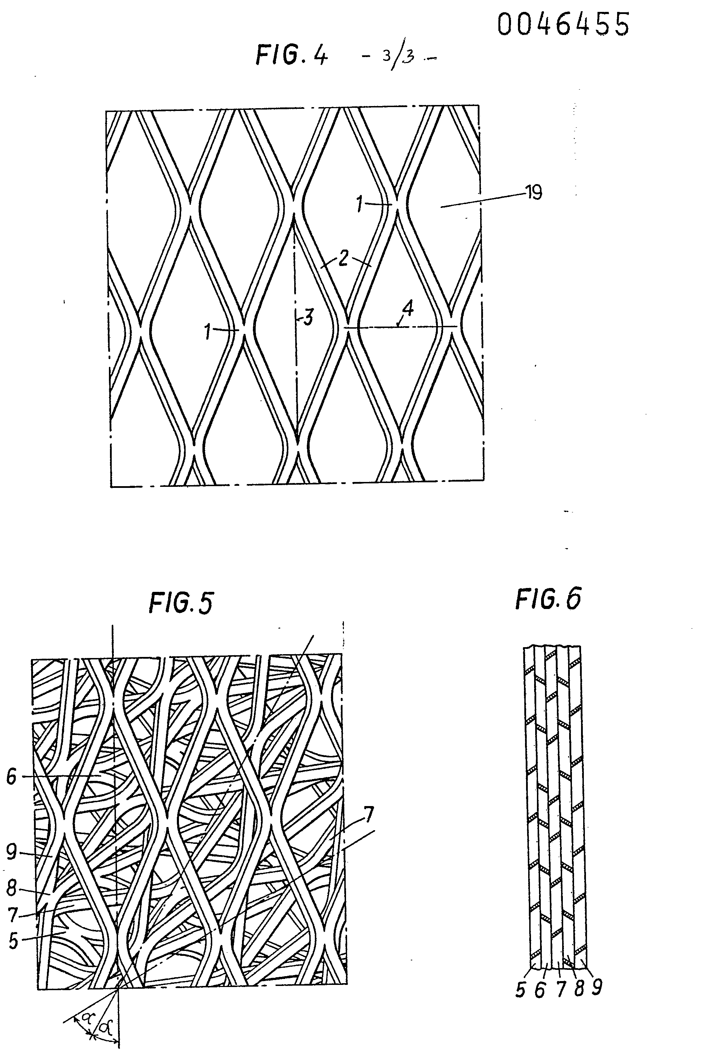

Fig. 1 zeigt in Seitenansicht eine Entstaubungseinrichtung für den Grubenbetrieb. Fig. 2 und 3 zeigen den Lufteintrittsteil der Entstaubungseinrichtung gemäß Fig. 1,wobei Fig. 2 einen Axialschnitt und Fig. 3 eine Ansicht in der Richtung des Pfeiles III der Fig. 1 darstellt. Fig. 4 zeigt ein übliches Streckmetallgitter in der Draufsicht. Fig.5 zeigt eine aus solchen Streckmetallgittern aufgebaute Matte in der Draufsicht. Fig.6 zeigt einen Querschnitt durch die Matte.

Bei der Entstaubungseinrichtung nach Fig. 1 ist 10 der Lufteintrittsteil, in welchen die Luft in Richtung des Pfeiles 11 eintritt. 12 ist der den Zentrifugalabscheider aufweisende Teil und 13 ist der das Gebläse enthaltende Teil und 14 ist das Ausblasefilter. Die Entstaubungseinrichtung ist auf Kufen 15 abgestützt.

Wie Fig. 2 und 3 im größeren Maßstab zeigen, sind im Lufteintrittsteil 10 Düsen 16 angeordnet, durch welche Wasser in versprühter oder vernebelter Form in den Luftstrom, welcher durch das im Teil 13 enthaltende Gebläse angesaugt wird, eingesprüht wird. In Strömungsrichtung 11 der Luft hinter den Düsen 16 ist eine Matte 17 quer zur Strömungsrichtung 11 der Luft angeordnet, durch welche die mit Wasser angefeuchtete Luft hindurchgesaugt wird. Diese Matte 17 weist quer zu ihrer Fläche verlaufende labyrinthartige Durchströmwege auf, durch welche die Luft hindurchgesaugt wird. Über Trichter 18 gelangt die Luft in den im Teil 12 angeordneten Zentrifugalabscheider.

Die Matte 17 ist von mehreren Lagen von Streckmetallgittern, wie sie in Fig. 4 dargestellt sind, gebildet. Ein solches in Fig. 4 dargestelltes Streckmetallgitter besteht aus einem Blech, welches mit gegeneinander versetzten Schlitzen versehen ist und quer zu den Schlitzen gestreckt ist. Es entstehen auf diese Art rhombische Durchbrechungen 19 mit einer langen Achse 3 und einer kurzen Achse 4, welche durch schmale Stege 2 begrenzt sind, deren Kreuzungsstellen mit 1 bezeichnet sind. Durch die Streckung wird das Material so deformiert, daß die Flächen der Stege nicht eben in der Ebene des Streckmetallgitters liegen, sondern verwunden sind. Wenn zwei solche Streckmetallgitter aufeinander gelegt werden, liegen sie somit nicht satt aneinander, sondern es wird durch die verwundenen Stege 2 ein schmaler Zwischenraum geschaffen.

Solche Streckmetallgitter gemäß Fig. 4 werden, wie Fig. 2 zeigt, zur Bildung der Matte in mehreren Lagen aufeinandergelegt. Hiebei sind die einzelnen Streckmetallgitter so zueinander angeordnet, daß in den aufeinanderfolgenden Lagen die langen Achsen 3 der Rhomben gegeneinander um einen Winkel $\alpha$ verdreht sind. Bei der Ausführungsform nach Fig. 5 sind beispielsweise die langen Achsen der Rhomben der jeweiligen Lagen gegenüber der benachbarten Lage um einen Winkel $\alpha$ von ungefähr 30° verdreht. In Richtung der Luftströmung von hinten nach vorne gerechnet ist die erste Lage mit 5, die zweite Lage mit 6, die dritte Lage mit 7, die vierte Lage mit 8 und die fünfte Lage mit 9 bezeichnet. Überdies sind die Kreuzungsstellen 1 in den benachbarten Lagen gegeneinander verschoben. Es entstehen auf diese Weise, wie Fig. 3 im Querschnitt zeigt, labyrinthartige Durchtrittswege für die Luft.

Patentansprüche :

1. Mischvorrichtung zum Vermischen von Wasser mit strömender, insbesondere staubbeladener Luft, wobei das Wasser in versprühter oder vernebelter Form dem Luftstrom durch eine, insbesondere von Düsen (16) gebildete Wasserzuführungseinrichtung, zugeführt wird, insbesondere für Entstaubungsanlagen für den Grubenbetrieb, dadurch gekennzeichnet, daß in Strömungsrichtung (11) der Luft hinter der Wasserzuführungseinrichtung (Düsen 16) wenigstens eine vom Luftstrom beaufschlagte flächige Matte (17) quer zur Strömungsrichtung (11) der Luft angeordnet ist, welche quer zu ihrer Flächenerstreckung verlaufende Durchströmwege für die Luft aufweist.

2. Vorrichtung nach Anspruch 1, dadurch gekennzeichnet, daß die Durchströmwege für die Luft labyrinthartig ausgebildet sind.

3. Vorrichtung nach Anspruch 1 oder 2, dadurch gekennzeichnet, daß die Matte (17) aus mehreren aneinander aufliegenden Lagen (5,6,7,8,9) von gegeneinander verschobenen Metallgittern besteht.

4. Vorrichtung nach Anspruch 3, dadurch gekennzeichnet, daß die Metallgitter Streckmetallgitter sind.

5. Vorrichtung nach einem der Ansprüche 1 bis 4, dadurch gekennzeichnet, daß die langen Achsen (3) der Durchbrechungen (19) der jeweils benachbarten Lagen (5,6,7, 8,9) von Streckmetallgittern gegeneinander verdreht sind.

6. Vorrichtung nach einem der Ansprüche 1 bis 5, dadurch gekennzeichnet, daß die langen Achsen (3) der Durchbrechungen (19) der jeweils benachbarten Lagen (5,6,7,

0046455

8,9) von Streckmetallgittern gegeneinander um ungefähr 30$^{\circ}$ verdreht sind.

7. Vorrichtung nach einem der Ansprüche 1 bis 6, dadurch gekennzeichnet, daß die Durchbrechungen (19) der jeweils benachbarten Lagen (5,6,7,8,9) von Streckmetallgittern in der Ebene derselben gegeneinander versetzt sind.

FIG. 1

FIG. 2

FIG. 3

FIG. 4 — 3/3 —

FIG. 5

FIG. 6

0046455

**Europäisches Patentamt**

**EUROPÄISCHER RECHERCHENBERICHT**

Nummer der Anmeldung

EP 81 89 0127

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| EP | GB - A - 2 048 709 (DRESSER INDUS-TRIES INC.)  * Abbildungen 3,4,5,7,8; Seite 2, Zeile 28 - Seite 3, Zeile 95 * | 1 | B 01 D 50/00 47/06 E 21 F 5/20 |
| A | DE - A - 2 364 738 (DSO CHIMIT-SCHESKO MASCHINOSTROENE) | | |
| A | GB - A - 884 483 (AIRFILPAT) HOLDINGS) | | |

**RECHERCHIERTE SACHGEBIETE (Int. Cl.³)**

B 01 D 47/00
50/00
53/00
E 21 F 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-12-1981 | BOGAERTS |

EPA form 1503.1  06.78